# EUROPEAN PATENT APPLICATION

(11) **EP 3 032 238 A1**
(43) Date of publication of application: **15.06.2016**
(21) Application number: 15197304.7
(22) Date of filing: 01.12.2015
(51) Int. Cl.: G01M 17/02

(54) **PROBE AND DEVICE FOR TESTING TIRES**

(30) Priority: 11.12.2014 US 201414567304
(71) Applicant: The Goodyear Tire & Rubber Company, Akron, Ohio 44316 (US)
(72) Inventor: SPEYER, Malcolm John, Wolverhampton, West Midlands WV1 4QQ (GB)
(74) Representative: Kutsch, Bernd

(57) **Abstract**

An apparatus for testing a tire is disclosed, the tire having opposed sidewalls joined together by a crown section, the crown section having an inner surface (228) and an outer surface. The apparatus (10) comprises a support frame (20) and first and second rollers (40, 50) connected to the support frame (20) and arranged to support a crown portion of the tire; a probe (100) having a support bracket for receiving a section of chains or a section of chainmail (160) therein, the section of chains comprising a plurality of a first chain members extending in a first direction, wherein each first chain member is in contact with at least one cross chain member, wherein the section of chains or the section of chainmail (160) is configured for being positioned in the tire and in electrical communication with a first electrode (110) and wherein one of said rollers (40, 50) is configured as a second electrode; and a power supply in electrical communication with the first and second electrode in order to create an electric potential between the first and second electrode.

## Description

### Field of the Invention

The invention relates generally to an apparatus for detecting flaws in tires and to an improved probe for a high voltage tire testing system.

### Background of the Invention

As new tires are generally expensive, it is becoming increasingly important to repair damaged tires rather than replace them with new tires, particularly for commercial fleet owners. Repairing a damaged tire is usually very simple and inexpensive, especially repairing simple holes or objects that become embedded in the treaded portion of the tire. However, it is necessary to inspect the tread portion for cracks, fissures, or holes and to repair if necessary.

While visual or machine inspection is reasonably accurate, flaws frequently are missed. The detection rate has been estimated to be on the order of 50%. Missed flaws, during retreading, can create problems in that they allow high pressure air to force its way through the flaws and into the tire structure, causing separation, heat and degradation of the tire, and which in turn can cause a failure of the tire either in the retread shop ("mold blows") or failure of the tire on the road. Thus an improved machine having greater accuracy is desired.

### Summary of the Invention

The invention relates to an apparatus in accordance with claim 1 and to a use of this apparatus in accordance with claim 11.

Dependent claims refer to preferred embodiments of the invention.

The invention provides in a first aspect an apparatus for testing a tire, the tire having opposed sidewalls joined together by a crown section, the crown section having an inner surface and an outer surface, the apparatus comprising a support frame, first and second rollers connected to the support frame and arranged to support to support a crown portion of the tire, a probe having a support bracket for receiving a section of chainmail therein, wherein the chainmail is positioned in the tire, wherein the chainmail section is in electrical communication with a first electrode, wherein one of said rollers is a second electrode, and a power supply in electrical communication with the first and second electrode in order to create an electric potential between the first and second electrode.

The invention provides in a second aspect an apparatus for testing a tire, the tire having opposed sidewalls joined together by a crown section, the crown section having an inner surface and an outer surface, the apparatus comprising a support frame, first and second rollers connected to the support frame and arranged to support to support a crown portion of the tire, a probe having a support bracket for receiving a section of chains therein, wherein the section of chains is comprised of a plurality of a first chain member extending in a first direction, wherein each first chain member is in contact with at least one cross chain member, wherein the section of chains is positioned in the tire and in electrical communication with a first electrode, wherein one of said rollers is a second electrode, and a power supply in electrical communication with the first and second electrode in order to create an electric potential between the first and second electrode.

The invention provides in a third aspect an electrode probe useful for testing a tire, the tire having opposed sidewalls joined together by a crown section, the crown section having an inner surface and an outer surface, the apparatus comprising a support frame, first and second rollers connected to the support frame and arranged to support to support a crown portion of the tire, a probe having a support bracket for receiving a section of chainmail therein, wherein the chainmail is positioned in the tire, wherein the chainmail section is in electrical communication with a first electrode, wherein one of said rollers is a second electrode, and a power supply in electrical communication with the first and second electrode in order to create an electric potential between the first and second electrode.

The invention provides in a fourth aspect an electrode probe useful for testing a tire, the tire having opposed sidewalls joined together by a crown section, the crown section having an inner surface and an outer surface, the apparatus comprising a support frame, first and second rollers connected to the support frame and arranged to support to support a crown portion of the tire, a probe having a support bracket for receiving a section of chains therein, wherein the section of chains is positioned in the tire and is in electrical communication with a first electrode, wherein the section of chains is comprised of a plurality of a first chain member extending in a first direction, wherein each first chain member is in contact with at least one cross chain member, wherein one of said rollers is a second electrode, and a power supply in electrical communication with the first and second electrode in order to create an electric potential between the first and second electrode.

### Brief Description of the Drawings

The invention will be described by way of example and with reference to the accompanying drawings in which:
FIG. 1 is a perspective view of a tire defect tester.
Fig. 2 is a perspective view of a test probe of the present invention.

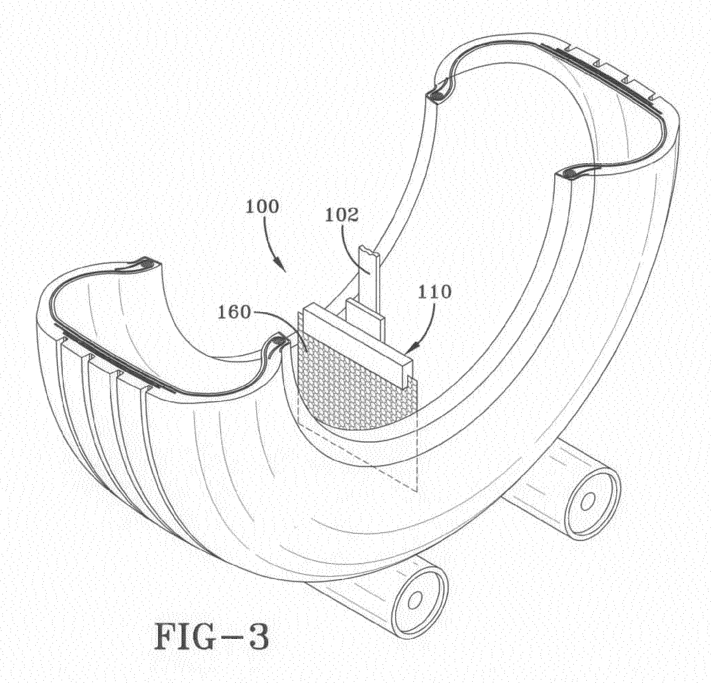

FIG. 3 is a partial view of a tire shown mounted on the electrode roller with a probe positioned in the bottom of the tire.

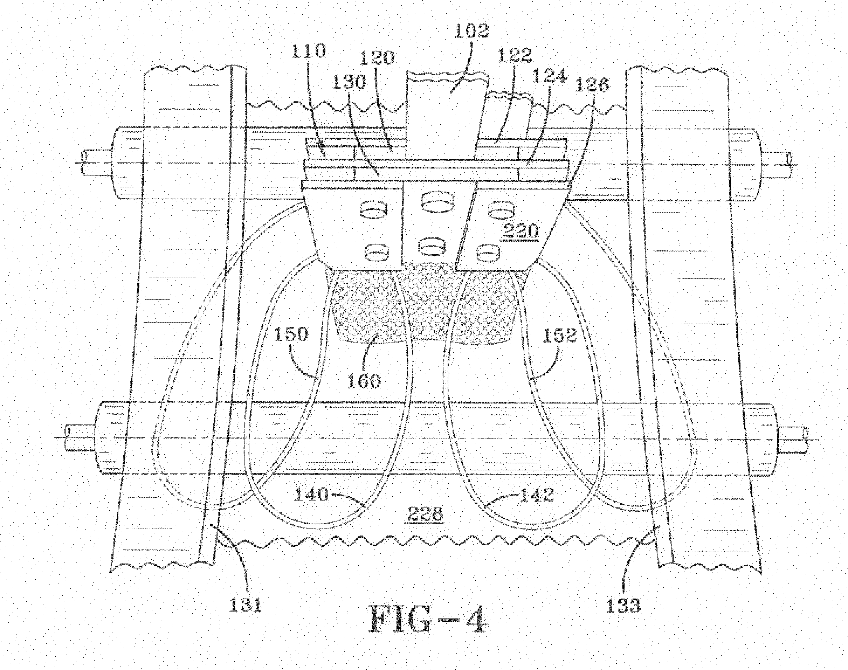

FIG. 4 is a close up view of the test probe shown mounted in the tire.

### Detailed Description of Example Embodiments of the Invention

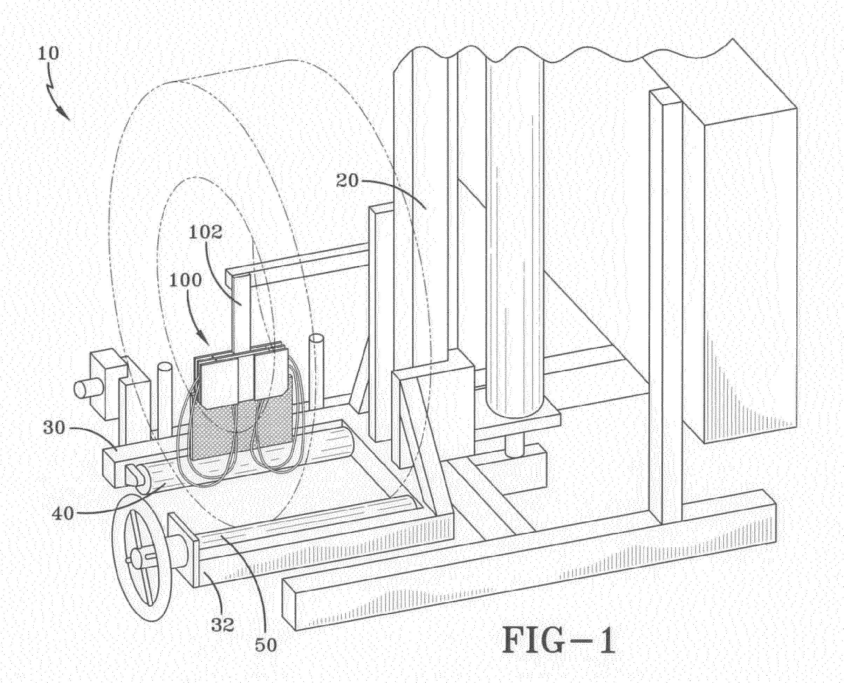

Figure 1 illustrates a carcass defect testing apparatus 10 of the present invention. The carcass defect testing apparatus 10 includes a support frame 20 having opposed support members 30, 32 which are arranged in parallel relationship to each other. A first support member 30 has a rubber roller 40 mounted thereto. The second support member 32 has a second roller 50 rotatably mounted thereto. The second roller 50 is positioned in parallel relationship with the rubber roller 40. The second roller is metal, and forms an electrode. The second roller electrode 50 is connected to a control panel or an optional controller system and is grounded. The first and second rollers are positioned apart a distance to support the tire. At least one of the first and second rollers are preferably rotationally driven by a motor.

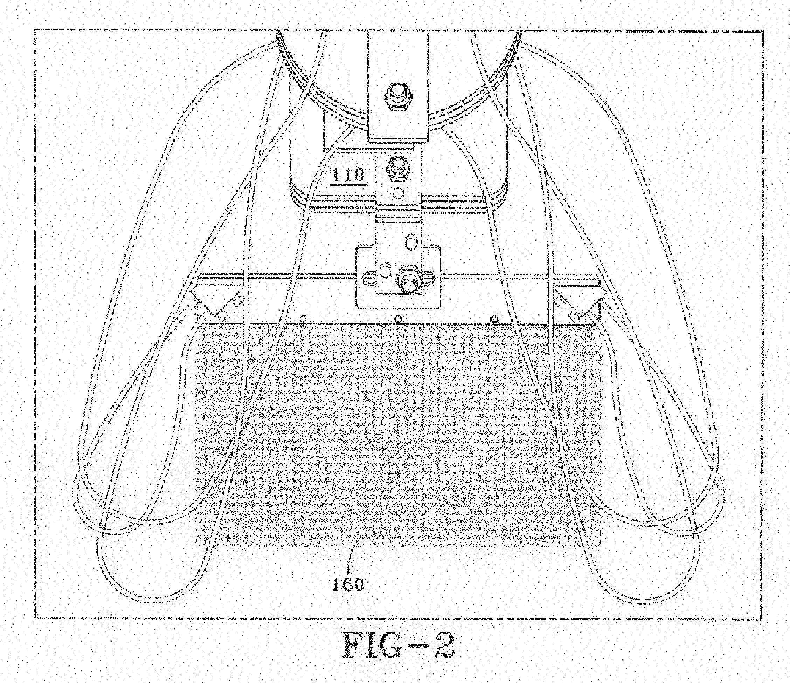

The carcass defect testing apparatus 10 comprises a probe 100 having an arm 102 that is connected to a first electrode 110. The first electrode is connected to the control panel or controller system and to a high voltage source. The arm 102 is preferably formed from an insulating material. The first electrode is formed of two conductive plates 120, 130 which are spaced apart and isolated by insulators 122, 124 and 126. A first pair of wire lobes 140, 142 are connected to the first conductive plate 120 and are of a sufficient length to engage the inner surface of the carcass in the crown region 128, opposite the tread. A second pair of wire lobes 150, 152 are connected to the second conductive plate 130. The second pair of wire lobes 150, 152 are positioned to engage the inner sidewalls 131, 133 of the tire and inner crown region 228. The probe 100 further includes a support bar having a chainmail section 160 received therein. The chainmail section extends downwardly from the first electrode 110 and is lowered into engagement with the inner surface of the tire. As shown in Figure 2, the chainmail section 160 is formed from metal rings linked together in both a vertical and horizontal direction to form a mesh fabric. The small metal rings are linked together in the vertical and the horizontal direction. The chainmail section 160 is preferably selected from chainmail having a density in the range of 3 to 200 circles per 2.54 cm, alternatively 30 to 100 circles per 2.54 cm.

In an alternate embodiment of the invention, the chainmail section may be replace by a section of chains oriented as follows. The section of chains is comprised of a plurality of first chain members, wherein the first chain members extend in a first direction. Preferably, the first chain members are oriented in parallel relation with respect to each other. The first direction is preferably in the vertical direction. The section of chains further includes at least one cross chain member which contacts or interlinks or joins with each first chain member. Preferably, there are at least two cross-chain members. Preferably the cross-chain members are oriented in a ninety degree direction transverse to the direction of the first chain members.

It has been found that by replacing the strands of loose chains with the chainmail section that the detection of flaws improved from a rate of detection of approximately 50 % with 25% repeatability, to a substantially improved detection rate of 90% with 100% repeatability. The probe 100 and/or the electrode 110 can be used in conjunction with other tire defect testers such as shown in US-B-6,050,136, US-A-4,516,068 and US-B-8,733,160. The disclosures of each of these patents are hereby incorporated by reference.

The first pair of lobed wires 140, 142 and the second pair of lobed wires 150, 152 and the chainmail section 160 are all electrified when the first electrode is energized. The second electrode is located in the metal roller. When a tire is to be tested, the outer circumference of the tire or tread is positioned on the first and second rollers 40, 50 so that a portion of the outer tread surface is in engagement with the first and second rollers 40, 50. The probe 100 and the first electrode 110 is positioned inside the tire. The first and second electrodes are connected to a controller system such as described in US-B-8,733,160. During operation, the tire is rotated by the operator or motor and the first and second electrodes are energized by the controller system. Pulses from the first electrode 110 pass through the tire, to a current sensing module in the controller. If a flaw is present in the tire tread, the insulation provided between the high voltage electrode and the ground will break down, and current will flow. The operator watches or listens for arcing to occur from either of the electrodes 110, 50. If arcing occurs, the operator stops rotating the tire and switches off the system. The controller system compares the current generated to the threshold setting. The controller determines if the threshold setting is exceeded, and notifies the operator if the threshold setting is exceeded.

## Claims

1. An apparatus for testing a tire, the tire having opposed sidewalls joined together by a crown section, the crown section having an inner surface (228) and an outer surface, the apparatus (10) comprising:
a support frame (20) and first and second rollers (40, 50) connected to the support frame (20) and arranged to support a crown portion of the tire;
a probe (100) having a support bracket for receiving a section of chains or a section of chainmail (160) therein, the section of chains comprising a plurality of a first chain members extending in a first direction, wherein each first chain member is in contact with at least one cross chain member, wherein the section of chains or the section of chainmail (160) is configured for being positioned in the tire and in electrical communication with a first electrode (110) and wherein one of said rollers (40, 50) is configured as a second electrode; and
a power supply in electrical communication with the first and second electrode in order to create an electric potential between the first and second electrode.

2. The apparatus of claim 1 wherein the section of chainmail (160) has a length in the range of from 7.5 cm to 38 cm.

3. The apparatus of claim 1 or 2 wherein the section of chainmail (160) has a width in the range of from 5 cm to 38 cm.

4. The apparatus of at least one of the previous claims wherein the section of chainmail (160) is formed from a plurality of interlinking circles.

5. The apparatus of at least one of the previous claims wherein the section of chainmail (160) has a density in the range of 3 to 200 circles per 2.54 cm, alternatively 30 to 100 circles per 2.54 cm.

6. The apparatus of at least one of the previous claims wherein the first chain members are oriented in parallel relation with respect to each other.

7. The apparatus of at least one of the previous claims wherein the first chain members are oriented in a vertical direction.

8. The apparatus of at least one of the previous claims wherein the at least one cross chain member is joined to each first chain member.

9. The apparatus of at least one of the previous claims wherein there are at least two cross chain members.

10. The apparatus of at least one of the previous claims wherein the cross chain members are oriented in a ninety degree direction transverse to the direction of the first chain members.

11. Use of the apparatus in accordance with at least one of the previous claims as an electrode probe for testing a tire, in particular for detecting flaws in tires.
